# EUROPÄISCHE PATENTSCHRIFT

(11) **EP 1 165 251 B1**
(45) Veröffentlichungstag und Bekanntmachung des Hinweises auf die Patenterteilung: **30.03.2005**
(21) Anmeldenummer: 01909492.9
(22) Anmeldetag: 18.01.2001
(51) Int. Cl.: B05C 13/00, B05C 11/10, B60J 10/00

(54) **KLEBEANLAGE FÜR TÜRZUSATZDICHTUNGEN**
GLUING DEVICE FOR AUXILIARY DOOR SEALS
APPAREIL DE COLLAGE POUR ELEMENT D'ETANCHEITE SUPPLEMENTAIRE DE PORTE

(30) Priorität: 26.01.2000 DE 10003387
(43) Veröffentlichungstag der Anmeldung: 02.01.2002
(73) Patentinhaber: Böhle, Hartmut, 82393 Iffeldorf (DE)
(72) Erfinder: Böhle, Hartmut, 82393 Iffeldorf (DE)
(74) Vertreter: Flosdorff, Jürgen, Dr.
(86) Internationale Anmeldenummer: PCT/DE2001/000194
(87) Internationale Veröffentlichungsnummer: WO 2001/054825

(56) Entgegenhaltungen:
- EP-A- 0 234 505

## Beschreibung

Die Erfindung betrifft eine Klebeanlage für Türzusatzdichtungen, die auf einen Türflansch eines Kraftfahrzeugs geklebt werden. Solche Klebeanlagen sind z.B. in Document EP-234 505 beschrieben.

Die Klebeanlage dient dazu, die Türzusatzdichtung für den eigentlichen Klebevorgang vorzubereiten, indem sie eine Türzusatzdichtung mittels Vakuum auf einer Montageschablone fixiert und die Türzusatzdichtung zusätzlich zu dem bereits darauf befindlichen Trockenklebemittelstreifen an beiden Endabschnitten mit einem viskosen Klebemittel versieht, nachdem durch atmosphärische Plasmabehandlung der Klebemittelauftragbereich aktiviert ist.

Der vorliegenden Erfindung liegt die Aufgabe zugrunde, eine Klebeanlage anzugeben, mit der automatisch die vorstehend angeführten Arbeitsschritte erfolgen, wobei gewährleistet sein soll, daß genau festgelegte kleine Mengen des Klebemittels an exakt eingehaltenen Stellen auf die Türzusatzdichtung aufgebracht werden, die zuvor einer Plasmabestrahlung unterzogen wurden.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die erfindungsgemäße Klebeanlage enthält eine Aufnahmeeinrichtung zur lösbaren Halterung einer Vakuum-Montageschablone, bei der an einer schmalseitigen Randkante mehrere voneinander beabstandete muldenförmige Saugstücke aus einem gummiartigen Material angeordnet sind, die über eine gemeinsame Leitung und ein Anschlußventil mit einer Vakuumquelle der Klebeanlage in Verbindung bringbar sind. Diese Saugstücke saugen eine vorzugsweise von Hand auf die Randkante aufgelegte Türzusatzdichtung an, die damit auf der Montageschablone fixiert ist. Die Montageschablone enthält ferner ein mit der Leitung verbundenes Entlastungsventil, durch dessen Betätigung, vorzugsweise durch Einwärtsdrücken eines Betätigungsstiftes, das Vakuum aufgehoben wird, so daß die Türzusatzdichtung freikommt, was in einem späteren Arbeitsschritt erfolgt, nämlich nach dem Ankleben der Türzusatzdichtung an den Türflansch eines Kraftfahrzeugs.

Die erfindungsgemäße Klebeanlage hat ferner eine Schlitteneinrichtung, mit der die Aufnahmeeinrichtung mit der daran festgeklemmten Montageschablone und der darauf fixierten Türzusatzdichtung unter bevorzugt zwei Plasmabestrahlungseinrichtungen hindurchgeführt wird, die die zum Aufbringen eines viskosen Klebemittels, vorzugsweise eines Einkomponenteklebers, vorgesehenen Endbereiche der Türzusatzdichtung bestrahlt. Die Schlitteneinrichtung transportiert die Montageschablone mit der Türzusatzdichtung weiter unter zwei Dosiereinrichtungen, die jeweils eine vorbestimmte Menge eines viskosen Klebemittels auf die Türzusatzdichtungen aufbringen. Hierbei wird die Montageschablone mit der Türzusatzdichtung durch eine Hubeinrichtung der Schlitteneinrichtung, zu der Austrittsöffnung der Dosiereinrichtung angehoben. Durch anschließendes Absenken wird der sich bildende Klebefaden abgerissen.

Die Schlitteneinrichtung wird von ihrem Antrieb bevorzugt mit konstanter Geschwindigkeit aus der Ausgangsposition in die Endposition unter den Dosiereinrichtungen und wieder zurück befördert. Wenn die Ausgangsposition wieder erreicht ist, wird die Montageschablone mit der darauf fixierten und mit dem aktivierten Klebemittel versehenen Türzusatzdichtung aus der Aufnahmeeinrichtung entnommen, woraufhin die Türzusatzdichtung mittels der Montageschablone an der vorgesehenen Stelle des Türflansches eines Kraftfahrzeugs angeklebt und nach Aufhebung des Vakuums von der Montageschablone freigegeben wird. Diese wird anschließend wieder an der Aufnahmeeinrichtung der erfindungsgemäßen Klebeanlage lösbar befestigt, wobei die ständig im Betrieb befindliche Vakuumeinheit automatisch mit den Saugstücken verbunden wird.

Da der Bereich des Türflansches, an den die Türzusatzdichtung mittels der von Hand betätigten Montageschablone angeklebt wird, nicht eben, sondern leicht gewölbt verläuft, müssen zum Anbringen der Türzusatzdichtungen an die linke und an die rechte Tür eines Kraftfahrzeugs unterschiedliche Montageschablonen verwendet werden, deren die Türzusatzdichtung aufnehmenden Randkanten spiegelbildlich zueinander verlaufen. Damit in der erfindungsgemäßen Klebeanlage beide Typen der Montageschablone gehandhabt werden können, ohne daß hierzu z.B. die Schlitteneinrichtung neu eingestellt werden muß, wird nach einem weiteren wesentlichen Gesichtspunkt der Erfindung vorgeschlagen, daß jede Montageschablone einen Abschnitt enthält, der auf einer geradlinigen Verbindung zwischen den Klebepunkten liegt. Mit diesem Abschnitt wird die Montageschablone an der Befestigungseinrichtung der Aufnahmeeinrichtung angebracht, beispielsweise in eine Klemmeinrichtung eingesteckt.

Bei dieser Ausbildung transportiert die Schlitteneinrichtung bei beiden Arten von Montageschablonen -für die linke und die rechte Fahrzeugtür- die Klebestellen in die exakt vorgegebene Position unter den beiden Dosiereinrichtungen, so daß die bevorzugt sehr kleine Klebstoffmenge, die beispielsweise 0,01 cm³ betragen kann, genau auf die vorgesehenen Stellen aufgebracht wird.

In näherer Ausgestaltung kann vorgesehen sein, daß die Montageschablone einen in der Einbaulagen der Klebeanlage unteren, geradlinig über seine gesamte Länge verlaufenden Abschnitt hat, auf dem sich der gewölbte obere Abschnitt mit der die Türzusatzdichtung aufnehmenden Randkante befindet. Die Montageschablone kann dabei einstückig aus Kunststoff hergestellt sein. Von der Unterseite der Montageschablone stehen an einem Endabschnitt das Anschlußventil zur Verbindung mit der Vakuumquelle und von dem anderen Endabschnitt das Entlastungsventil vor.

Es ist nicht nur unerläßlich, daß die Türzusatzdichtungen exakt an den vorgegebenen Stellen (die nicht unbedingt an den Endabschnitten der Türzusatzdichtung liegen müssen und deren Anzahl natürlich nicht auf zwei beschränkt ist), mit Klebemittel versehen werden, sondern dieses muß in einer exakt eingehaltenen vorgegebenen Menge aufgebracht werden, die im Falle der Türzusatzdichtung sehr klein ist.

Um dieses Problem zu lösen, wird erfindungsgemäß vorgeschlagen, daß jede in der Klebeanlage vorgesehene Dosiereinrichtung eine Kartusche mit dem Klebemittel enthält, die über eine Ventileinrichtung mit einem Verdrängerdosierer verbindbar ist, und daß die Ventileinrichtung ein Doppelsitzventil enthält, das entweder die Verbindung zwischen der Kartusche und dem Verdrängerdosier oder die Verbindung zwischen dem Verdrängerdosierer und der Ventil-Auslaßöffnung freigibt.

Dabei ist weiter vorzugsweise vorgesehen, daß in die Kartusche ein Pneumatikkolben eingreift, der den zum überführen des Klebemittels in den Verdrängerdosierer erforderlichen Druck erzeugt, und daß der Verdrängerdosierer eine pneumatische Kolben/Zylindereinheit enthält, deren Kolben Weg-gesteuert ist, wodurch eine exakt definierte Klebemittelmenge ausgestoßen wird. Die Ausgangsposition des Kolbens in dem Zylinder ist bevorzugt einstellbar.

Bei der erfindungsgemäßen Dosiereinrichtung steht demnach dann, wenn ihr Doppelsitzventil die Ventil-Auslaßöffnung der Dosiereinrichtung verschließt, der Innenraum der Kartusche mit dem Zylinder des Verdrängerdosierers in Verbindung, um stets den Zylinderraum vor dem in die Ausgangsstellung zurückkehrenden Kolben wieder zu füllen. Wenn das Doppelsitzventil in die angehobene Stellung bewegt wird, in der die Ventil-Auslaßöffnung freigegeben ist, verschließt ein bevorzugt konischer Abschnitt der Ventilnadel einen entsprechend geformten Ventilsitz und unterbricht damit die Verbindung zwischen der Kartusche und dem Verdrängerdosierer, woraufhin der pneumatische Kolben des Verdrängerdosierers bis zu seiner exakt vorgegebenen Endlage vorgeschoben wird und die vorgesehene Klebemittelmenge ausstößt.

Die hin- und herbewegbare Ventilnadel hat dabei bevorzugt einen kugeligen Ventilnadelkopf, der mit einem entsprechend geformten Ventilsitz zusammenwirken kann, um die Ventilauslaßöffnung zu verschließen. In der rückwärtigen, oberen Lage läuft -wie oben erwähnt- ein konischer Abschnitt der Ventilnadel auf einen entsprechend geformten Ventilsitz auf.

Die Position des in der Kartusche sitzenden pneumatischen Kolbens wird zweckmäßigerweise überwacht, wobei bei Erreichen eines minimalen Füllstandes eine Anzeige erfolgen sollte, daß eine neue, gefüllte Kartusche einzusetzen ist.

Während die erfindungsgemäße Dosiereinrichtung im Zusammenhang mit der erfindungsgemäßen Klebeanlage beschrieben ist, sei darauf hingewiesen, daß diese Dosiereinrichtung nicht nur zum Ausbringen eines Klebemittels, sondern zum Ausbringen allgemein niedrig bis hochviskoser Substanzen wie z.B. Fette oder dergleichen geeignet ist. Die Dosiereinrichtung stellt demnach eine unabhängige Erfindung dar, die insbesondere zum exakten Ausbringen kleinster Mengen eines viskosen Stoffes geeignet ist.

Weitere Einzelheiten der Erfindung ergeben sich aus der nachfolgenden Beschreibung sowie anhand der Zeichnung. Dabei zeigen:
- Fig. 1: eine Seitenansicht einer Montageschablone;
- Fig. 2: eine Aufsicht auf die Montageschablone gemäß Fig. 1;
- Fig. 3: eine Frontansicht einer Ausführungsform der Klebeanlage;
- Fig. 4: eine Seitenansicht der Klebeanlage;
- Fig. 5: eine Aufsicht auf die Klebeanlage;
- Fig. 6: eine perspektivische Ansicht der Klebeanlage;
- Fig. 7: eine teilweise geschnittene perspektivische Ansicht einer Ausführungsform der Dosiereinrichtung und
- Fig. 8: einige Details der Kartusche in auseinandergezogener Darstellung.

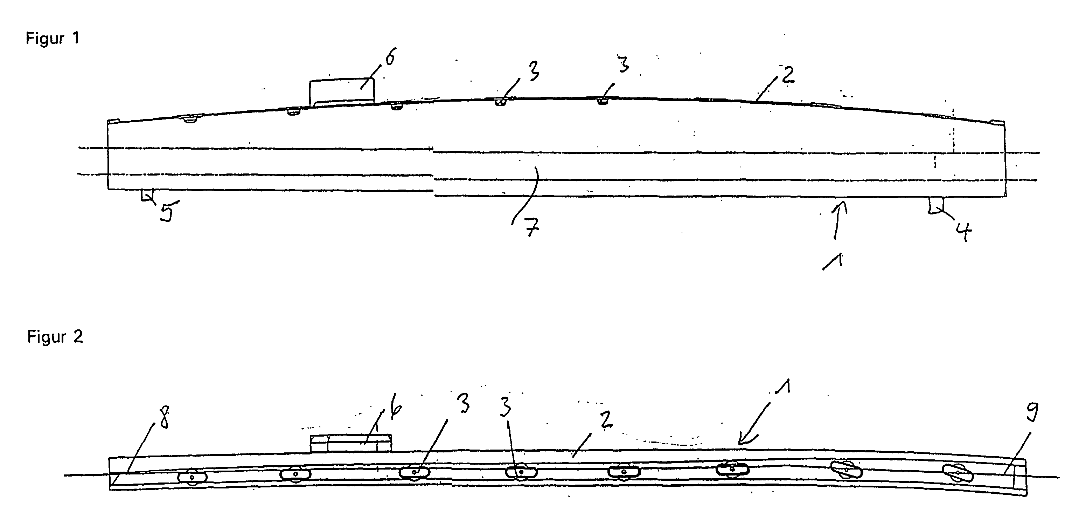

Die Figuren 1 und 2 zeigen eine Montageschablone 1, die entlang ihrer in den Figuren oberer Randkante 2 acht voneinander beabstandete muldenförmige Saugstücke 3 aus einem gummiartigen Material enthält, die mit einer in den Figuren nicht sichtbaren Leitung verbunden sind, die sich in einem entlang der Länge der Montageschablone 1 erstreckenden Hohlraum befindet. An einem seitlichen Ende ist diese Leitung mit einem von der Unterseite der Montageschablone 1 vorstehenden Anschlußventil 4 versehen, während das andere seitliche Ende der Leitung mit einem ebenfalls von der Unterseite der Montageschablone 1 überstehenden Entlastungsventil 5 versehen ist.

Auf die Randkante 2 wird eine in den Figuren nicht dargestellte streifenförmige Türzusatzdichtung aufgelegt, die von den Saugstücken 3 fest an die Randkante 2 angesaugt wird, wenn die Verbindung zu einer nicht dargestellten Vakuumquelle hergestellt ist. Durch Einwärtsdrücken des Stiftes des Entlastungsventils 5 wird die Ansaugkraft wieder aufgehoben.

Die Montageschablone 1 ist mit einer Führungseinrichtung 6 versehen, mit der sie so an einer nicht dargestellten Formschablone positioniert werden kann, daß die Türzusatzdichtung exakt an der vorgesehenen Stelle an einen Türrahmen andrückbar ist. Hierzu wird die Formschablone zuvor an den Türrahmen festgeklemmt.

Die Randkante 2 hat -wie Figur 2 zeigt- eine leicht gekrümmte Form. Die Montageschablone für die gegenüberliegende Tür eines Kraftfahrzeugs enthält eine spiegelbildliche Krümmung.

Damit beide Typen von Montageschablonen in der weiter unten beschriebenen Klebeanlage ohne Veränderung der Einstellung ihrer Funktionselemente gehandhabt werden können, ist ein unterer Abschnitt 7 der Montageschablone 1 geradlinig ausgebildet, und zwar so, daß sich die seitlichen Endbereiche 8, 9, auf die punktgenau ein viskoser Klebstoff aufzubringen ist, auf dieser Geraden befinden. Damit wird jede Montageschablone 1 mit den vorgesehenen Klebepunkten 8, 9 auf den Türzusatzdichtungen exakt unter die Dosiereinrichtungen der Klebeanlage verfahren, ohne daß die zugehörige Transporteinrichtung verstellt werden muß.

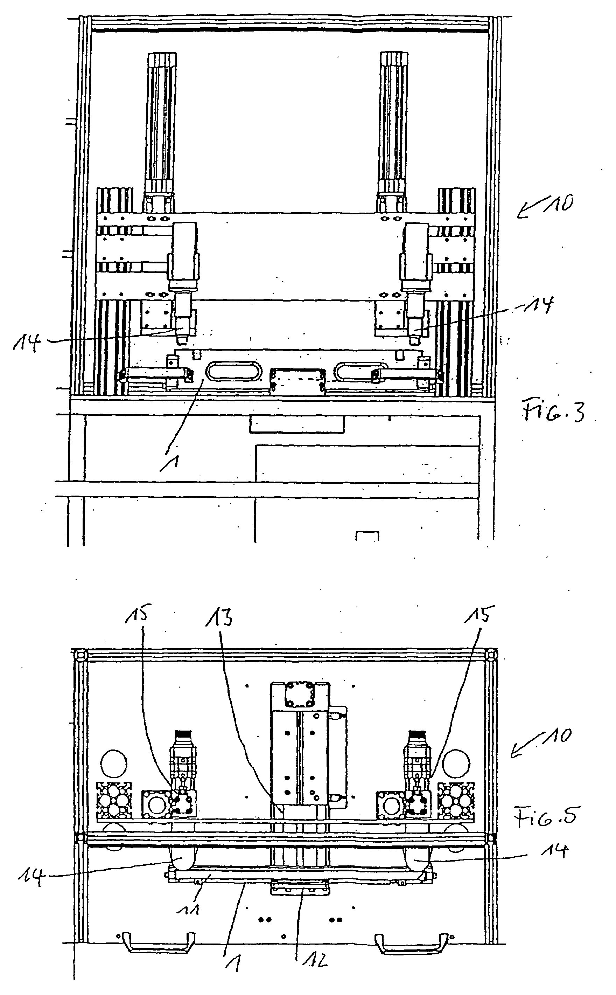

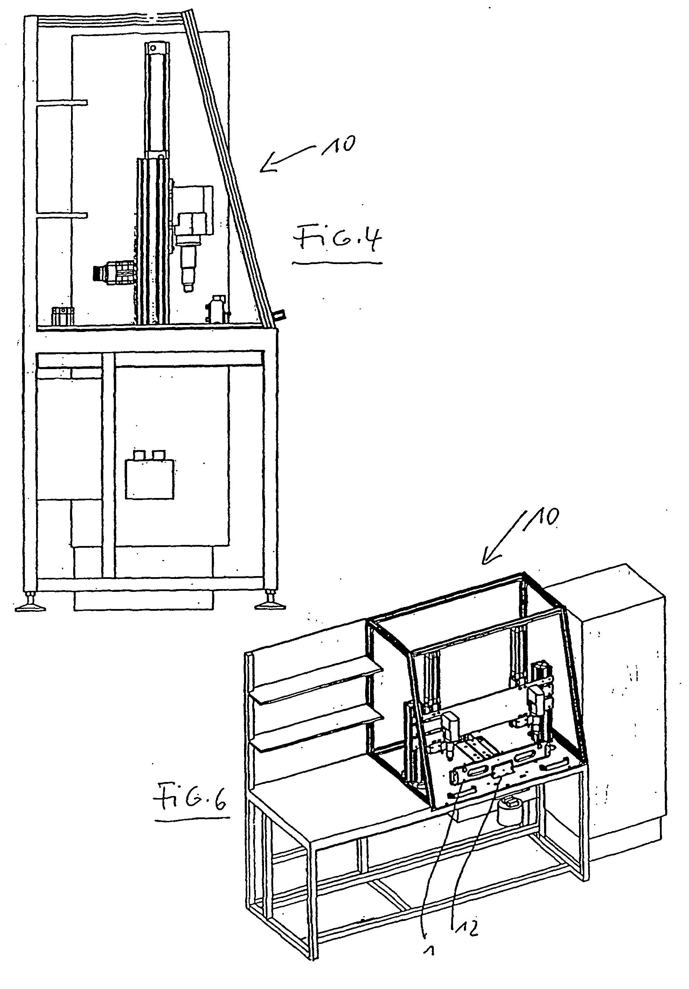

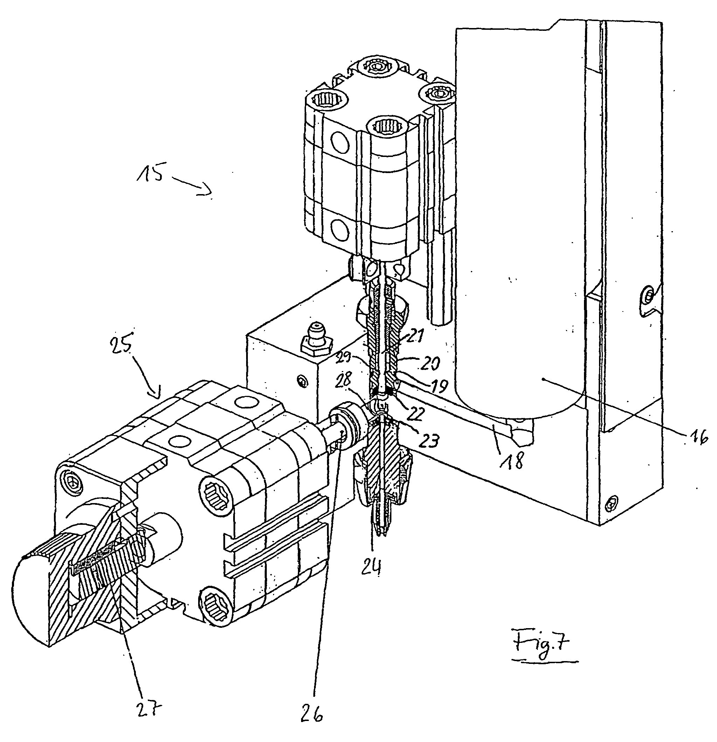

In den Figuren 3 bis 6 ist in verschiedenen Ansichten eine Klebeanlage 10 dargestellt, in der eine Türzusatzdichtung 11 für den Klebevorgang vorbereitet wird. Eine Montageschablone 1 wird mittels einer Klemmeinrichtung 12 an einem horizontal verfahrbaren Schlitten 13 befestigt, wobei das Anschlußventil 4 die Verbindung zu einer Vakuumpumpe (nicht dargestellt) herstellt. Wenn nun die Türzusatzdichtung 11 auf die obere Randkante 2 der Montageschablone 1 aufgelegt wird, wird die Türzusatzdichtung 11 auf der Montageschablone fixiert.

Die Schlitteneinrichtung 13 transportiert die Montageschablone 1 mit der Türzusatzdichtung 11 mit einer vorgegebenen Geschwindigkeit unter zwei Plasmabestrahlungseinrichtung 14 hindurch und unter zwei Dosiereinrichtungen 15. Wenn sich die Bereiche 8, 9, auf die punktgenau eine sehr kleine Klebemittelmenge aufzutragen ist, unter der Ventilauslaßöffnung der Dosiereinrichtungen 15 befinden, wird die Halterung 12 mit der Montageschablone 1 mittels einer Hubeinrichtung angehoben, so daß die Türzusatzdichtung 11 in Kontakt mit dem austretenden Klebemittels gerät. Durch Absenken der Montageschablone wird der sich bildende Klebefaden abgerissen. Die Schlitteneinrichtung 13 kehrt daraufhin wieder in die Ausgangslage zurück, in der die Montageschablone mit der durch das Vakuum gehaltenen Türzusatzdichtung aus der Halterung 12 entnommen wird.

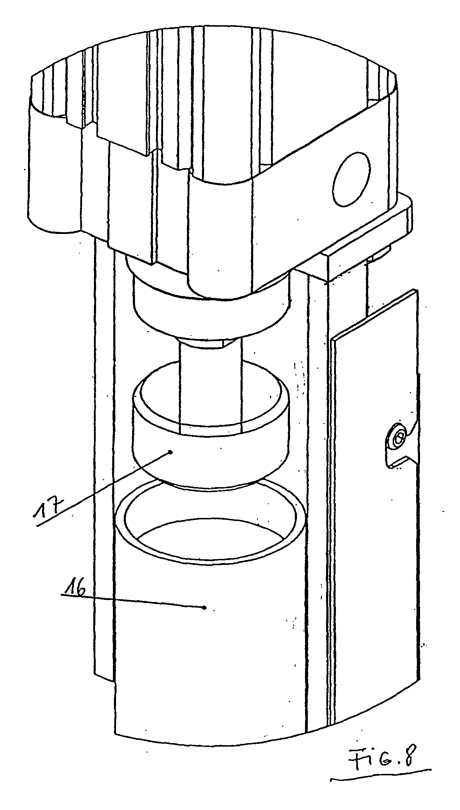

Die in Figur 7 in näheren Einzelheiten dargestellte Dosiereinrichtung 15 enthält eine Kartusche 16, in der sich das viskose Klebemittel, beispielsweise ein Einkomponentenkleber, befindet. In die Kartusche greift ein Pneumatikkolben 17 ein, der Klebemittel aus der Kartusche befördern kann. Der Auslaß aus der Kartusche 16 ist über eine Bohrung 18 mit der vertikalen Bohrung 19 eines Ventilgehäuses 20 verbunden, in dem ein Doppelsitzventilstift 21 angeordnet ist. Dieser Doppelsitzventilstift 21 hat einen oberen konischen Abschnitt 22, der im angehobenen Zustand des Ventils an einem entsprechend geformten Ventilsitz dicht anliegt, und einen unteren kugeligen Ventilkopf 23, der in der unteren Position des Ventilkörpers dessen Auslaßöffnung 24 verschließt.

Die Dosiereinrichtung 15 hat außerdem einen insgesamt mit 25 bezeichneten Verdrängerdosierer mit einer pneumatischen Kolben/Zylindereinrichtung, deren Verdrängerkolben 26 Weg-gesteuert ist. Die zurückgezogene Ausgangslage des Verdrängerkolbens 26 ist durch eine Einstellschraube 27 einstellbar.

Die Auslaßöffnung des Zylinders des Verdrängerdosierers 25 steht über eine Bohrung 28 mit dem Bereich der Ventilbohrung 19 in Verbindung, der zwischen dem kegelstumpfförmigen Ventilabschnitt 22 und dem kugeligen Ventilkopf 23 liegt.

Wenn der Bewegungsmechanismus des Ventilstiftes 21 den Doppelsitzventilstift in die untere Lage versetzt, ist die Auslaßöffnung 24 des Dosierers verschlossen und der Innenraum der Kartusche 16 steht über die Bohrungen 18, die vertikale Bohrung des Ventils und die seitlich abzweigende Bohrung 28 mit dem Zylinder des V erdrängerdosierers 25 in Verbindung, so daß infolge des von dem pneumatischen Kolben 17 ausgeübten Drucks Klebemittel in den Zylinder des Verdrängerdosierers 25 gedrückt wird, wobei gleichzeitig dessen Kolben in die Ausgangslage zurückgezogen wird. Eine Dichtung 29 oberhalb der Einmündung der Bohrung 18 in den vertikalen Kanal 19 des Ventils, in dem der Ventilstift 21 sitzt, verhindert, daß das Klebemittel dabei nach oben austritt.

Wenn der Bewegungsmechanismus den Ventilstift 21 nach oben versetzt, so daß der kegelstumpfförmige Ventilabschnitt 22 dicht an seinem Sitz anliegt, ist die Auslaßöffnung 24 freigegeben, so daß durch Vorschub des Kolbens des Verdrängerdosierers 25 bis zu einem vorderen Anschlag exakt die vorgegebene Menge des viskosen Klebemittels ausgestoßen wird.

## Patentansprüche

1. Klebeanlage für Türzusatzdichtungen, die auf einen Türflansch eines Kraftfahrzeugs geklebt werden,
**gekennzeichnet durch**
eine Aufnahmeeinrichtung (12) zur lösbaren Halterung einer Montageschablone (1), deren eine schmalseitige Randkante (2) mit mehreren voneinander beabstandeten muldenförmigen Saugstücken (3) versehen ist, die über eine gemeinsame Leitung und ein Anschlußventil (4) mit einer Vakuumquelle in Verbindung bringbar sind, um eine auf die Randkante (2) aufgelegte Türzusatzdichtung (11) anzusaugen, wobei die Leitung ferner mit einem Entlastungsventil (5) versehen ist, **durch** dessen Betätigung das Vakuum aufgehoben wird, und
eine Schlitteneinrichtung (13), mit der die Aufnahmeeinrichtung (12) mit der Montageschablone (1) unter wenigstens einer Plasmabestrahlungseinrichtung (14) hindurch unter wenigstens eine Dosiereinrichtung (15) transportierbar ist, die eine vorbestimmte Menge eines viskosen Klebemittels auf die Türzusatzdichtung (11) aufbringt.

2. Kleberanlage nach Anspruch 1,
**dadurch gekennzeichnet, daß** die Dosiereinrichtung (15) eine Kartusche (16) mit dem Klebemittel enthält, die über eine Ventileinrichtung mit einem Verdrängerdosierer (25) verbindbar ist, und daß die Ventileinrichtung ein Doppelsitzventil enthält, das entweder die Verbindung zwischen der Kartusche (16) und dem Verdrängerdosierer (25) oder die Verbindung zwischen dem Verdrängerdosierer (25) und der Auslaßöffnung (24) der Ventileinrichtung freigibt.

3. Kleberanlage nach Anspruch 2,
**dadurch gekennzeichnet, daß** in die Kartusche (16) ein Pneumatikkolben (17) eingreift.

4. Kleberanlage nach Anspruch 2,
**dadurch gekennzeichnet, daß** der Verdrängerdosierer (25) eine pneumatische Kolben/Zylindereinrichtung enthält.

5. Kleberanlage nach einem der Ansprüche 2 bis 4,
**dadurch gekennzeichnet, daß** die Ventileinrichtung eine hin- und herbewegbare Ventilnadel (21) mit einem kugeligen unteren Ventilkopf (23) und einem davon beabstandeten konischen Abschnitt (22) und entsprechend geformte Ventilsitze enthält.

6. Kleberanlage nach Anspruch 4,
**dadurch gekennzeichnet, daß** der pneumatische Kolben Weg-gesteuert ist.

7. Kleberanlage nach Anspruch 3,
**dadurch gekennzeichnet, daß** die Position des Kolbens 17 überwacht wird und daß bei einem minimalen Füllstand eine Anzeige erfolgt.

## Claims

1. A gluing system for additional door seals which are adhesively bonded to a door flange of an automotive vehicle,
**characterized by**
a receiving means (12) for detachably holding a mounting template (1) whose one peripheral edge (2) at the narrow side is provided with a plurality of spaced-apart trough-like suction members (3) which are connectable via a joint line and a connection valve (4) to a source of vacuum to suck in an additional door seal (11) placed on said peripheral edge (2), said line being further provided with a relief valve (5) by the actuation of which the vacuum is eliminated, and by
a slide means (13) by which said receiving means (12) with said mounting template (1) can be transported below and past at least one plasma irradiation means (14) below at least one metering device (15) which applies a predetermined amount of viscous adhesive to said additional door seal (11).

2. The gluing system according to claim 1,
**characterized in that** said metering device (15) comprises a cartridge (16) containing said adhesive, which is connectable via a valve means to a displacement-type metering means (25), and that said valve means includes a double seat valve which releases either the connection between said cartridge (16) and said displacement-type metering means (25) or the connection between said displacement-type metering means (25) and an outlet opening (24) of said valve mans.

3. The gluing system according to claim 2,
**characterized in that** a pneumatic piston (17) engages into said cartridge (16).

4. The gluing system according to claim 2,
**characterized in that** said displacement-type metering means (25) contains a pneumatic piston/cylinder means.

5. The gluing system according to any one of claims 2 to 4,
**characterized in that** said valve means contains a reciprocating valve needle (21) including a ball-shaped lower valve head (23) and a conical section (22) spaced therefrom, and correspondingly shaped valve seats.

6. The gluing system according to claim 4,
**characterized in that** said pneumatic piston is displacement-controlled.

7. The gluing system according to claim 3,
**characterized in that** the position of said piston (17) is monitored and that a minimum filling level is indicated.

## Revendications

1. Appareil de collage pour des éléments d'étanchéité supplémentaire de porte qui sont collés sur une bride de porte d'un véhicule automobile,
**caractérisé par**
une installation de réception (12) pour retenir amoviblement un gabarit de montage (1) dont une arête de bord (2) au côté étroit est munie de plusieurs pièces d'aspiration (3) en forme de creux espacées les unes des autres qui peuvent être reliées par un conduit commun et une vanne de raccordement (4) à une source de vide, pour aspirer un élément d'étanchéité supplémentaire de porte (11) appliqué sur l'arête de bord (2), où le conduit est muni en outre d'une vanne de décharge (5) par l'actionnement de laquelle le vide est supprimé et
une installation à chariot (13) dans laquelle l'installation de réception (12) avec le gabarit de montage (1) peut être transportée, en passant sous au moins une installation de rayonnement au plasma (14), sous au moins une installation de dosage (15) qui applique une quantité prédéterminée d'une colle visqueuse à l'élément d'étanchéité supplémentaire de porte (11).

2. Appareil de collage selon la revendication 1, **caractérisé en ce que** l'installation de dosage (15) comporte une cartouche (16) avec la colle, qui peut être reliée par une installation de vanne à un doseur de refoulement (25), et **en ce que** l'installation de vanne comporte une vanne à siège double qui libère soit la liaison entre la cartouche (16) et le doseur de refoulement (25) soit la liaison entre le doseur de refoulement (25) et l'ouverture de sortie (24) de l'installation de vanne.

3. Appareil de collage selon la revendication 2, **caractérisé en ce qu'**un piston pneumatique (17) s'engage dans la cartouche.

4. Appareil de collage selon la revendication 2, **caractérisé en ce que** le doseur de refoulement (25) contient une installation pneumatique à piston/cylindre.

5. Appareil de collage selon l'une des revendications 2 à 4, **caractérisé en ce que** l'installation de vanne contient un pointeau de vanne (21) déplaçable selon un mouvement alternatif avec une tête de vanne inférieure sphérique (23) et un tronçon conique (22) espacé de celle-ci ainsi que des sièges de vanne formés d'une manière correspondante.

6. Appareil de collage selon la revendication 4, **caractérisé en ce que** le déplacement du piston pneumatique est commandé.

7. Appareil de collage selon la revendication 3, **caractérisé en ce que** la position du piston (17) est surveillée, et dans le cas d'un niveau de remplissage minimal, un affichage a lieu.
